# EUROPEAN PATENT APPLICATION

(11) **EP 4 718 190 A1**
(43) Date of publication of application: **01.04.2026**
(21) Application number: 25202743.8
(22) Date of filing: 17.09.2025
(51) Int. Cl.: G05B 19/418

(54) **METHOD AND APPARATUS FOR CONTROLLING AUTOMATIC TRANSIT OF YARN SPINDLE AND STORAGE MEDIUM**

(30) Priority: 29.09.2024 CN 202411370359
(71) Applicant: Zhejiang Hengyi Petrochemical Co., Ltd., Zhejiang 311200 (CN)
(72) Inventor: QIU, Yibo, Hangzhou, 311200 (CN); PENG, Xiantao, Hangzhou, 311200 (CN); JIN, Junliang, Hangzhou, 311200 (CN); WANG, Dandan, Hangzhou, 311200 (CN); TENG, Zheng, Hangzhou, 311200 (CN); SHEN, Jun, Hangzhou, 311200 (CN)
(74) Representative: Bittner, Bernhard

(57) **Abstract**

Provided are a method and apparatus for controlling automatic transit of a yarn spindle, an electronic device and a storage medium, relating to the field of chemical fiber intelligent technology. The method includes that: a first PLC acquires second service data of a target workstation from a second PLC corresponding to the target workstation, obtains first service data of the target workstation based on the second service data, the second service data includes a compulsory transit variable being equal to 1 (S201); the first PLC sends the first service data to an MES, receives transit indication information which is determined based on the compulsory transit variable by the MES (S202); and the first PLC analyzes the transit indication information to obtain an analysis result, returns the analysis result to the second PLC to perform a yarn spindle transit task based on the analysis result by the second PLC (S203).

## Description

### TECHNICAL FIELD

The present disclosure relates to the field of chemical fiber intelligent technology, particularly to method and apparatus for controlling automatic transit of a yarn spindle, an electronic device and a storage medium.

### BACKGROUND

In the field of chemical fiber production, an efficient assembly line is the key for ensuring production capacity and efficiency. This production line is densely packed with a plurality of precisely collaborative workstations. Of particular importance is smooth flow of numerous yarn spindles on the assembly line, and their transiting speed is directly related to an overall production rhythm and efficiency, becoming one of bottlenecks that cannot be ignored in improving production capacity. Therefore, how to achieve rapid transit of the yarn spindles in the assembly line has become an important issue that urgently needs to be overcome in the current innovation of chemical fiber production technology.

### SUMMARY

The present disclosure provides method and apparatus for controlling automatic transit of a yarn spindle, an electronic device and a storage medium.

As a first aspect, the present disclosure provides a method for controlling automatic transit of a yarn spindle, applied to a system for controlling the automatic transit of the yarn spindle, the system for controlling the automatic transit of the yarn spindle includes a manufacturing execution system (MES), a first programmable logic controller (PLC) and a plurality of second PLCs, where each of the plurality of second PLCs is configured to control at least one workstation, the plurality of second PLCs each is connected to the first PLC, the first PLC is connected to the MES, the method for controlling the automatic transit of the yarn spindle includes:
acquiring, by the first PLC, second service data of a target workstation from a second PLC corresponding to the target workstation, obtaining first service data of the target workstation based on the second service data, where the second service data includes a compulsory transit variable being equal to 1;
sending, by the first PLC, the first service data to the MES, receiving transit indication information which is determined based on the compulsory transit variable by the MES for the target workstation, where the transit indication information is transit permission; and
analyzing, by the first PLC, the transit indication information to obtain an analysis result, returning the analysis result to the second PLC corresponding to the target workstation for controlling the target workstation to perform a yarn spindle transit task based on the analysis result by the second PLC.

As a second aspect, the present disclosure provides an apparatus for controlling automatic transit of a yarn spindle applied to a system for controlling the automatic transit of the yarn spindle, the system for controlling the automatic transit of the yarn spindle includes a MES, a PLC and a plurality of second PLCs, where each of the plurality of second PLCs is configured to control at least one workstation, the plurality of second PLCs each is connected to the first PLC, the first PLC is connected to the MES, the apparatus for controlling automatic transit of the yarn spindle includes:
a first controlling module configured for the first PLC to acquire second service data of a target workstation from a second PLC corresponding to the target workstation, obtain first service data of the target workstation based on the second service data, where the second service data includes a compulsory transit variable being equal to 1;
a second controlling module configured for the first PLC to send the first service data to the MES, receive transit indication information which is determined based on the compulsory transit variable by the MES for the target workstation, where the transit indication information is transit permission; and
a third controlling module configured for the first PLC to analyze the transit indication information to obtain an analysis result, return the analysis result to the second PLC corresponding to the target workstation for controlling the target workstation to perform a yarn spindle transit task based on the analysis result by the second PLC.

As a third aspect, an electronic device is provided, which includes:
at least one processor; and
a memory connected in communication with the at least one processor,
where the memory stores an instruction executable by the at least one processor, and the instruction, when executed by the at least one processor, enables the at least one processor to execute the method of any of the embodiments of the present disclosure.

As a fourth aspect, a non-transitory computer-readable storage medium storing a computer instruction thereon is provided, where the computer instruction is used to cause a computer to execute the method of any of the embodiments of the present disclosure.

According to the technology of the present disclosure, it is possible to achieve management of automatic, online and compulsory transit of the yarn spindle, thereby improving transiting efficiency of the yarn spindle.

It should be understood that the contents described in this summary part are not intended to limit critical or essential features of embodiments of the present disclosure, nor are they used to limit the scope of the present disclosure. Other features of the present disclosure will be easily understood through the following description.

### BRIEF DESCRIPTION OF THE DRAWINGS

The above and other aspects and features of various embodiments of the present disclosure will be more apparent by combining the accompanying drawings and referring the following description. In the accompanying drawings, same or similar elements are represented by same or similar reference numerals, in the drawings.
FIG. 1 is a schematic diagram of a system for controlling automatic transit of a yarn spindle according to embodiments of the present disclosure;
FIG. 2 is a flowchart diagram of a method for controlling automatic transit of a yarn spindle according to embodiments of the present disclosure;
FIG. 3 is a schematic diagram of a processing flow of sending a compulsory transit request to a MES by a first PLC according to embodiments of the present disclosure;
FIG. 4 is a schematic diagram of processing flow of sending a transit indication information to a second PLC by a first PLC after generating the transit indication information by a MES according to embodiment of the present disclosure;
FIG. 5 is a schematic structural diagram of an apparatus for controlling automatic transit of a yarn spindle according to embodiments of the present disclosure;
FIG. 6 is a block diagram of an electronic device for implementing a method for controlling automatic transit of a yarn spindle according to embodiments of the present disclosure.

### DETAILED DESCRIPTION

The following descriptions of exemplary embodiments of the present disclosure are made in combination with the accompanying drawings, includes various details of the embodiments of the present disclosure to facilitate understanding, and should be considered merely exemplary. Therefore, those having skill in the art should recognize that various changes and modifications may be made to the embodiments described herein without departing from the scope of the present disclosure. Meanwhile, for clarity and conciseness, descriptions of well-known functions and structures have been omitted in the following descriptions.

In the descriptions to the embodiments of the present disclosure, terms "first", "second", "third" and the like in the embodiments of the specification and claims of the present disclosure are used for distinguishing similar objects and do not necessarily to describe a specific order or sequence. In addition, terms "include" and "have" as well as any variations thereof are intended to cover non-exclusive inclusions, such as containing a series of steps or units. Methods, systems, products, or devices do not necessarily need to be limited to those steps or units clearly listed, but may include other steps or units that are not clearly listed or inherent to these processes, methods, products, or devices.

Before introducing the technical solution of the embodiments of the present disclosure, further explanation will be given on technical terms that may be used in the present disclosure:
MES: a software system used to monitor and manage a manufacturing process, capable of real-time collecting, processing, and analyzing of production data, optimizing production planning and resource allocation.
PLC: an industrial digital computer used to control automation devices, such as a mechanical device, a robot and the like on a production line, capable of performing a logical operation and processing on an input signal according to a preset program, and outputting a control signal to control operations of the devices.
Service data: service-related data generated during the manufacturing process, such as a device status, a product quantity, a production progress, and the like, the data is a basis for MES and PLC to make a decision and control.

Transit indication information, also called transit instruction: instruction and parameter information generated by the MES according to analysis on the service data and used to guide a device to perform a transit task.

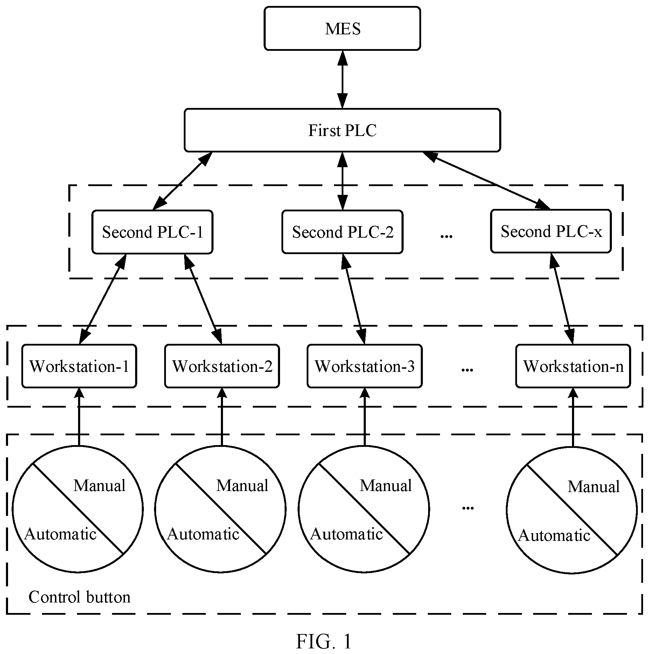

FIG. 1 shows a schematic diagram of a system for controlling automatic transit of a yarn spindle. As shown in FIG. 1, the system for controlling the automatic transit of the yarn spindle includes a MES, a first PLC and a plurality of second PLCs, the plurality of second PLCs each is connected to the first PLC, the first PLC is connected to the MES, each of the plurality of second PLCs is responsible for controlling at least one workstation. Where the second PLCs are mainly responsible for collecting and processing real-time service data of a target workstation and providing the real-time service data to the first PLC for use. The first PLC is responsible for interacting with the second PLCs and acquiring second service data from the second PLCs, and is also responsible for interacting with the MES, sending first service data to the MES and receiving transit indication information issued by the MES based on the first service data, and then notifying the second PLCs to perform the transit indication information with respect to the target workstations.

In some implementations, the MES is used to determine the transit indication information for the target workstation based on the first service data sent by the first PLC, and return the transit indication information to the first PLC.

In some implementations, the first PLC is used to obtain the first service data with respect to the target workstation based on the second service data with respect to the targe workstation acquired from the second PLCs.

In some implementations, each of the second PLCs is used to acquire and store the second service data of the target workstation managed by itself.

Herein the first service data is a data set collected and processed by the first PLC and related to a real-time status of the target workstation, a processing progress of the yarn spindle, a quality inspection result of the yarn spindle, a request type and other information. The data is of great significance for monitoring an operation status of the production line and making a decision on whether to permit transit.

Herein the second service data is a data set collected and processed by the second PLC and related to the real-time status of the target workstation, the processing progress of the yarn spindle, the quality inspection result of the yarn spindle, a bar code of the yarn spindle and other information. The data is of great significance for monitoring the operation status of the production line.

The system for controlling the automatic transit of the yarn spindle according to the embodiments of the present disclosure enables the MES to monitor a status of each workstation in real-time and make adjustment and optimization as needed through real-time communication and data processing between the MES, the first PLC, and the second PLCs. Through the above automation control, manual intervention has been reduced, and efficiency and accuracy of transit of the yarn spindle have been improved, material waste and downtime caused by human error are reduced, and production costs is lowered. Through the above automation control, stability and consistency of the yarn spindle during a transit process are ensured, which helps to improve an overall production rhythm and efficiency. By using the first PLC as an intermediate layer between the MES and the plurality of second PLCs, the system for controlling the automatic transit of the yarn spindle has significant advantages in centralizing management, integrating data, reducing burden on the MES, enhancing system scalability, improving safety and stability, and simplifying a network structure.

If the MES directly communicates with the plurality second PLCs, it will need to process a large amount of real-time data and requests, which may increase the burden on the MES and affect its performance. By using the first PLC as the intermediate layer, the MES only needs to communicate with the first PLC, thereby reducing its processing burden. Without the first PLC as the intermediate layer, the MES needs to establish a direct communication connection with each second PLC, which may make the network structure complex and difficult to manage. By using the first PLC for relay, the network structure may be greatly simplified, making an entire communication process clearer and more orderly. The first PLC may serve as a safety barrier to verify and filter data from the second PLCs, preventing malicious or erroneous data from entering into the MES. Meanwhile, a redundancy and fault tolerance mechanism of the first PLC may improve stability and reliability of the system, ensuring that the production line can still operate normally in an event of some device failures.

With expansion and upgrade of the production line, it may be necessary to add more second PLCs. If the MES directly communicates with each second PLC, then each time of expansion requires corresponding configuration and modification of the MES. By using the first PLC as the intermediate layer, it is only necessary to add support for new second PLCs in the first PLC, without modifying the configuration of the MES. The first PLC may receive service data from the plurality of second PLCs in a centralized manner, and perform unified processing and analysis, this manner makes control of the entire production line more centralized and orderly, reducing complexity and confusion of direct communication between the MES and the plurality of second PLCs. The first PLC can integrate data from different second PLCs to form a more comprehensive production view, which enables the MES to make a decision based on more comprehensive data, thereby optimizing a production plan and resource allocation. Meanwhile, the first PLC may also preprocess and filter data, reducing an amount of data transmitted to the MES and improving communication efficiency.

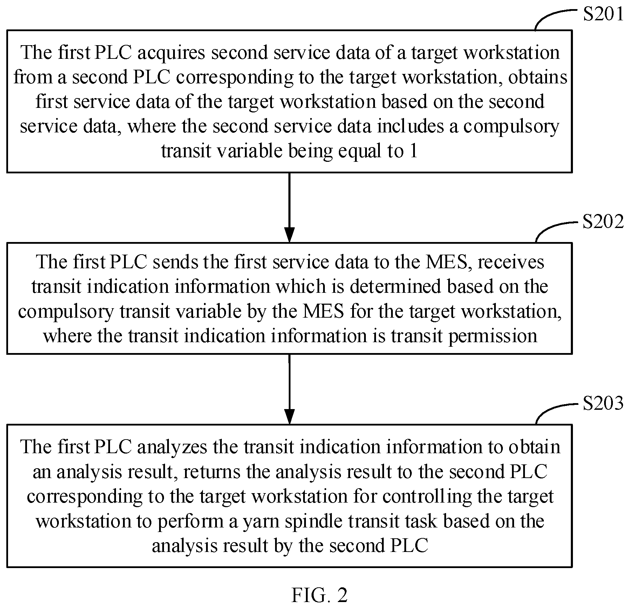

The embodiments of the present disclosure provide a method for controlling automatic transit of a yarn spindle. FIG. 2 is a flowchart diagram of the method for controlling the automatic transit of the yarn spindle according to embodiments of the present disclosure. The method for controlling the automatic transit of the yarn spindle may be applied to an apparatus for controlling the automatic transit of the yarn spindle, which is located on an electronic device. The electronic device is applied to the system for controlling the automatic transit of the yarn spindle. The electronic device includes but is not limited to a fixed device and/or a mobile device. For example, the fixed device includes but is not limited to a server, which may be a cloud server or a regular server. For example, the mobile device includes but is not limited to a mobile phone, a tablet, a laptop, or the like. In some possible implementations, the method for controlling the automatic transit of the yarn spindle may also be achieved by a processor calling a computer readable instruction stored in a memory. As shown in FIG. 2, the method for controlling the automatic transit of the yarn spindle includes following steps.

In step S201, the first PLC acquires second service data of a target workstation from a second PLC corresponding to the target workstation, obtains first service data of the target workstation based on the second service data, where the second service data includes a compulsory transit variable being equal to 1;

In step S202, the first PLC sends the first service data to the MES, receives transit indication information which is determined based on the compulsory transit variable by the MES for the target workstation, where the transit indication information is transit permission.

In step S203, the first PLC analyzes the transit indication information to obtain an analysis result, returns the analysis result to the second PLC corresponding to the target workstation for controlling the target workstation to perform a yarn spindle transit task based on the analysis result by the second PLC.

In some implementations, the compulsory transit variable is a flag bit or a variable for representing whether the target workstation requests compulsory transit in the system for controlling automatic transit of the yarn spindle. When the variable is equal to 1, it represents that the target workstation requests the compulsory transit.

In some implementations, each second PLC collects and process relevant second service data such as a location, a status and an amount of the yarn spindle based on a status of the workstation controlled by the second PLC, and then stores the data in a data storage area such as a data block (DB) allocated by the second PLC for its responsible workstation.

In some implementations, the first PLC periodically retrieves the second service data of each workstation from each second PLC and generates the first service data for each workstation. The first service data includes information about statuses of all relevant workstations and required operations. The MES analyzes the first service data to determine the transit indication information of the target workstation (i.e. the workstation that currently needs to perform the yarn spindle transit task). The transit indication information includes the transmit permission or transmit prohibition. Where, when the transit indication information is the transmit permission, it may also include parameters such as specific transit time, target location, speed, and the like.

In some implementations, the MES sends the generated transit indication information to the first PLC through a network or other communication manners such as a Management Interface (MI).

In some implementations, the first PLC receives the transit indication information from the MES and performs analysis processing to extract a specific control instruction and parameters. After the first PLC completes the analysis, the analysis result (i.e. the specific control instruction and the parameters) is sent to the second PLC corresponding to the target workstation through a communication interface or a communication protocol.

In some implementations, the second PLC receives the analysis result and controls a mechanical device, a robot or the like at the target workstation to perform the yarn spindle transit task based on the control instruction and the parameters in the analysis result.

In some implementations, the first PLC establishes a communication connection with the second PLC corresponding to the target workstation through a preset communication protocol. The first PLC sends a data request instruction to the second PLC, for requesting to obtain the second service data of the target workstation. After receiving the request, the second PLC sends the second service data including the compulsory transit variable (a value of which is 1, indicating that the workstation requests the compulsory transit) to the first PLC. After receiving the data, the first PLC converts the second service data into the first service data suitable for its subsequent processing according to an internal logic or a preset rule.

In some implementations, the first PLC sends the processed first service data (including the compulsory transit variable) to the MES through the communication interface. After receiving the first service data, the MES directly generates the transit indication information (such as the "transit permission") based on the compulsory transit variable. The MES sends the transit indication information back to the first PLC through the same or different communication protocol. After receiving the transit indication information sent by the MES, the first PLC analyzes and extracts the key analysis result (such as confirming whether there is the transit permission). The first PLC returns the analysis result to the second PLC corresponding to the target workstation through the communication connection. After receiving the analysis result, the second PLC controls the target workstation to perform the corresponding yarn spindle transit task according to the instruction in the result (such as the transit permission), such as directly moving the yarn spindle to a next workstation.

For example, it assumed that there is a plurality of workstations on the production line, each of the plurality of workstations is responsible for a different processing task. After a processing of the yarn spindle at a certain workstation (such as a weighing workstation) is completed, for some reasons, a next processing needs to be proceeded directly. At this point, the second PLC of the workstation sends the second service data including the compulsory transit variable which is equal to 1 to the first PLC. The first PLC processes the second service data and then sends it to the MES. The MES determines that the workstation can skip an online transit determining step based on the compulsory transit variable which is equal to 1 in the second service data, and sends the indication information of the "transit permission" to the first PLC. After the analysis, the first PLC returns the result to the second PLC. Subsequently, the second PLC sends an instruction to a transit device (such as a conveyor belt or a robotic arm) to transfer the processed yarn spindle to the next workstation (such as a roll diameter measurement workstation) for further processing.

Main types of the yarn spindle involved in the solution of the embodiments of the present disclosure may include one or more of partially oriented yarns (POYs), fully drawn yarns (FDYs), draw textured yarns (DTYs, or referred as low elasticity yarns) and the like. For example, specific types of yarns may include polyester partially oriented yarns, polyester fully drawn yarns, polyester drawn yarns, polyester draw textured yarns, polyester staple fiber (PSF) and the like.

The solution of the embodiments of the present disclosure enables the MES to monitor the status of each workstation in real-time and adjust and optimize a transmit strategy as needed through real-time communication and data processing among the MES, the first PLC and the plurality of second PLCs. By implementing automatically compulsory transit control, unnecessary steps are reduced to improve overall smoothness and efficiency of the production line. When a specific situation (such as device failure, material shortage or the like) appears, a production process can be quickly adjusted to reduce production interruptions. The MES makes a decision based on real-time data, enhancing accuracy and response speed of production management.

In the embodiments of the present disclosure, controlling the target workstation to perform the yarn spindle transit task based on the analysis result by the second PLC includes notifying the transit device or directly controlling the transit device by the second PLC to transfer the yarn spindle which has been processed by the target workstation to a next workstation of the target workstation in a case where the analysis result is the transit permission.

Herein the transit device refers to an automated device used on the production line to transfer materials (such as the yarn spindle) between different workstations, such as the conveyor belt, the robotic arm, an automatic handling cart, or the like, which is only an illustrative example and is not intended to limit all possible devices included in the transit device, but is not exhaustive here.

In some implementations, the analysis result includes an evaluation result of the MES on whether the yarn spindle at the target workstation satisfies transit conditions, and is used to guide subsequent control operations.

In some implementations, when the analysis result is the transit permission, the second PLC may send an instruction or a signal to the transit device, notifying the transit device to prepare to transfer the yarn spindle which has been processed by the target workstation. After receiving the instruction from the second PLC, the transit device may transfer the yarn spindle from the target workstation to the next workstation according to a preset program or path. During the transfer, a series of actions such as grabbing, transporting, and placing on the yarn spindle may be involved, all of which require precise control to ensure safety and accurate transfer of the yarn spindle.

In some implementations, the second PLC may continuously monitor an operating status of the transit device and a transfer situation of the yarn spindle. Once the transfer is completed, the transit device may send a feedback signal to the second PLC for confirming that the current yarn spindle has successfully arrived at the next workstation. The second PLC updates an internal status based on the feedback signal to prepare for subsequent control operations.

For example, it assumed that there is a plurality of workstations on the production line, each of the plurality of workstations is responsible for a different processing task. After a processing on the yarn spindle at a certain workstation (such as a weighing workstation) is completed, the second PLC receives an analysis result of this workstation, regardless of whether parameters such as weight, a specification, a batch number, and the like satisfy requirements, as long as the compulsory transit variable is equal to 1, it is determined as the "transit permission". Subsequently, the second PLC sends the instruction to the transit device (such as the conveyor belt or the robotic arm) to transfer the processed yarn spindle to the next workstation (such as the roll diameter measurement workstation) for further processing.

In this way, the first PLC and the plurality of second PLCs can accurately control a transit process of the yarn spindle, reduce waiting time and manual intervention, and improve an overall efficiency of the production line, thereby reducing errors caused by human factors and improving stability and reliability of the production process. PLCs may be flexibly programed, and can quickly adjust control logic according to production needs, adapt to processing on yarn spindles of different types and specifications. The MES supports the compulsory transit, which not only significantly shortens stay time of the yarn spindle at the workstation, improves overall smoothness of the production line, but also effectively reduces energy consumption and labor costs.

In the embodiments of the present disclosure, the method of controlling the automatic transit of the yarn spindle further includes setting the compulsory transit variable to 1 when the second PLC detects that a control button corresponding to the target workstation has been rotated to a manual mode position, where the compulsory transit variable being equal to 1 represents that the target workstation requests the compulsory transit.

In some implementations, the control button is a physical switch or knob used to manually control a status of a device or system, which is used to switch an operation mode of the target workstation (such as automatic or manual). A manual mode is a specific position or mark on the control button. When the button is rotated to this position, it indicates that a manual control mode has been selected which is used to trigger the compulsory transit request.

In some implementations, a rotary control button with a plurality of positions (such as automatic, manual, and the like) is installed on the target workstation, which is used to switch the operation mode of the workstation. The second PLC continuously monitors a status of the control button through its built-in input module or an external sensor. When the control button is detected to be rotated from an automatic mode to the manual mode, especially when it is rotated to the position corresponding to the "manual mode", the second PLC will recognize this change. Once the second PLC detects that the control button has been rotated to the manual mode position, it will immediately set the internally stored compulsory transit variable (usually a flag bit or a variable) to 1. This operation indicates that the target workstation is currently requesting the compulsory transit. Subsequently, the second PLC will update its internal related service data, including information about setting the compulsory transit variable to 1, and prepare to send this data (including a new value of the compulsory transit variable) to the first PLC. The transmission of the data may be carried out through the previously established communication connection.

Taking an automatic packaging line in a chemical fiber industry as an example, a quality inspection workstation needs to urgently stop quality inspection and bypass a quality inspection step due to a sudden malfunction. An operator quickly arrives at the workstation and turns the control button of the quality inspection workstation from the automatic mode to the manual mode. At this point, the second PLC detects this change, sets the compulsory transit variable to 1, and triggers a subsequent automatic compulsory transit control process. In the end, the workstation successfully bypasses the quality inspection step and continues to execute a next process.

In this way, by introducing the control button, the operator is allowed to directly intervene in the production process in a specific situation, thereby improving flexibility of the system and its ability to respond to an emergency. When it is necessary to urgently skip a workstation, the operator may quickly trigger the compulsory transit request by rotating the control button, and the system can respond quickly and execute a corresponding control logic. In addition, during an device failure or a maintenance period, partial bypassing of the production line may be achieved through manual control, thereby reducing overall downtime and improving production efficiency.

In the embodiments of the present disclosure, the method of controlling the automatic transit of the yarn spindle further includes determining that the transit indication information is the transit permission in a case where the MES detects that there is the compulsory transit variable being equal to 1 in the first service data.

In some implementations, the MES receives the first service data sent from the first PLC through its communication interface. The data includes various information related to the target workstation, including the compulsory transit variable. A data processing module within the MES analyzes the received first service data and extracts key information, especially the value of the compulsory transit variable. During the analysis, the MES checks the value of the compulsory transit variable. If it detects that the compulsory transit variable is equal to 1, this means that the target workstation requests the compulsory transit. Since the compulsory transit variable is equal to 1, the MES determines that the transit indication information is the "transit permission". The MES explicitly indicates that the target workstation is permitted to transit, and sends this information back to the first PLC through the communication interface.

Assuming that on an automated production line, a notification to increase production is received unexpectedly, the operator switches the control button from the automatic mode to the manual mode in order to complete the task on time. At this point, the second PLC detects this situation and sends the second service data including the compulsory transit variable being equal to 1 to the first PLC. After processing, the first PLC sends the first service data containing the same compulsory transit variable to the MES. Upon receiving the data, the MES immediately analyzes and checks the value of the compulsory transit variable. After determining that it is 1, it quickly generates the indication information of the "transit permission" and sends it to the first PLC. The first PLC then transfers this information to the second PLC, which ultimately controls the target workstation to directly execute the transit task.

In this way, by directly checking the compulsory transit variable in the first service data, the MES can quickly and accurately make the decision on whether to permit the transit, thereby reducing a possibility of human intervention and erroneous judgment. Once the MES detects the compulsory transit request, it can immediately generate and send the compulsory transit information, thereby speeding up response time of an entire transit control process. When it is necessary to bypass a certain workstation or a step urgently, the MES's automatic decision-making ability can ensure smooth progress of the production process, thereby reducing production interruption and resource waste.

In the embodiments of the present disclosure, the method of controlling the automatic transit of the yarn spindle further includes: recording, by the MES, the first service data and without performing determination processing of online transit conditions in the case where the MES detects that there is the compulsory transit variable being equal to 1 in the first service data.

In some implementations, the determination processing of the online transit conditions includes: a process where the MES evaluates and analyzes the received service data according to preset rule and algorithm to determine whether the target workstation is permitted to perform a transit operation. These conditions may include various factors such as a production plan, device status, and a material supply situation.

In some implementations, when the MES receives the first service data sent by the first PLC, it first performs data reception and preliminary verification. If a format of the data is correct and contains the compulsory transit variable, the MES will fully record the data into its internal database or log system for subsequent data traceability. The recorded content may include all or a part of key fields of the first service data, as well as information such as a timestamp when receiving the data.

In some implementations, under normal circumstances, the MES will perform the determination processing of the online transit conditions on the received service data according to the preset rule and algorithm to decide whether to permit the target workstation to transit. However, when detecting that the first service data contains the compulsory transit variable being equal to 1, the MES will skip this step and not perform any determining processing related to the online transit conditions; the MES will directly determine the transit indication information as the "transit permission" and generate corresponding indication information and then send it to the first PLC. This indication information clearly informs the first PLC and the second PLC corresponding to the target workstation that the current workstation is permitted to skip certain steps or the entire transit process.

In some implementations, after sending the indication information, the MES may continue to monitor subsequent production status of the workstation and update its internal production plan and status information when appropriate. At the same time, the MES will also retain the previously recorded first service data for subsequent data analysis, troubleshooting, or auditing.

Taking the automatic packaging line in the chemical fiber industry as an example, a batch of yarn spindles is pre-produced, and the operator switches the control button of each workstation to the manual mode; each workstation sends the compulsory transit request, with the compulsory transit variable being equal to 1. After the second PLC detects the request, it sends the second service data containing the compulsory transit variable being equal to 1 to the first PLC. The first PLC processes and forwards it to the MES. After receiving the data, the MES immediately records it and skips the determination processing of the online transit conditions, directly determines the transit indication information as the "transit permission" and sends the indication information to the first PLC. The second PLC controls direct transit of the yarn spindle on the workstation, thus completing production of the pre-produced yarn spindles in a shorter time.

In this way, by skipping the determination processing of the online transit conditions, the MES can respond the compulsory transit request and reduce unnecessary calculations and resource consumption. In emergency situations, responding quickly to the compulsory transit request can help reduce a risk of production interruptions and fault spread, thereby improving stability and reliability of an entire production system. The MES records the first service data, which helps to trace and analyze the production process and the transit request in the future, providing data support for improving production processes and optimizing system performance.

In the embodiments of the present disclosure, the determination processing of the online transit conditions may include: determining whether a yarn spindle of the target workstation satisfies a transit condition based on target string data corresponding to the target workstation, where the target string data is obtained by analyzing the first service data by the MES; determining the transit indication information as the transit permission if the transit condition is satisfied; and determining the transit indication information as the transit prohibition if the transit condition is not satisfied.

In some implementations, the transit indication information is used to indicate whether the yarn spindle on the production line may continue to be transferred to the next workstation for processing. According to a determining result of the transit condition, the transit indication information may be the "transmit permission" or the "transmit prohibition".

In some implementations, the MES first receives the first service data sent from the first PLC. The data usually includes the status information of the target workstation on the production line, the processing progress of the yarn spindle, the quality inspection result, and times of requesting transit. There is a dedicated data analyzing module set up within the MES to analyze the received first service data and extract the target string data corresponding to the target workstation. The target string data may be encoded to represent a specific working status or attribute.

In some implementations, based on the analyzed target string data, the MES further compares and analyzes it with preset transit conditions. These transit conditions may include whether a processing quality of the yarn spindle satisfies a standard, whether all processing tasks at the current workstation have been completed, whether there are device failures or production abnormalities, etc. If the yarn spindle at the target workstation satisfies all the preset transit conditions, the MES determines that the transit indication information is the "transit permission", indicating that the yarn spindle may be safely transferred to the next workstation for further processing. If the yarn spindle at the target workstation does not satisfy any of the transit conditions, the MES determines the transit indication information as the "transmit prohibition" and may trigger a corresponding alarm mechanism to notify on-site personnel for inspection and handling.

In some implementations, the MES sends the determination result (the transit permission or the transit prohibition) as the transit indication information to the second PLC or other related control devices through the communication interface. These transit devices execute corresponding control logic based on the received transit indication information, such as starting or stopping a transfer action of the yarn spindle.

Taking the automatic packaging line in the chemical fiber industry as an example, when the first PLC detects that the yarn spindle processing at a certain workstation (such as the weighing workstation) is completed, it will send the first service data containing the status information of that workstation to the MES. After receiving the data, the MES first analyzes the target string data (such as a QR code and weight information of the yarn spindle requested for transit), and then compares it with the preset transit conditions (such as whether a weight of the yarn spindle of this specification is within an allowable range, which includes A level: within the allowable range, B level: light weight, C level: heavy weight). If a quality level of the yarn spindle is the A level, the MES will determine that the transit indication information is the "transit permission" and notify the second PLC to initiate the transfer action of the yarn spindle; If the quality level of the yarn spindle is the B lever or the C level, it is determined as the "transmit prohibition" and triggers the alarm mechanism.

In this way, through the MES's analysis of the first service data and precise determination of the transit conditions, it can ensure that only the yarn spindle that satisfy requirements can continue to be transferred, thereby improving accuracy and reliability of production. Timely detection and prevention of a yarn spindle that does not satisfy the transit conditions may reduce abnormal situations in the production process, such as device failures, quality issues, and the like, thereby reducing production risks. By automatically determining and indicating of the transit information, manual intervention and waiting time may be reduced, and an overall operational efficiency of the production line may be improved.

In the embodiment of the present disclosure, acquiring the second service data of the target workstation by the first PLC from the second PLC corresponding to the target workstation includes that the first PLC acquires the second service data of the target workstation from the second PLC at regular intervals.

In some implementations, a timer is set in the first PLC to control a time interval for data acquisition. This time interval may be adjusted according to actual needs of the production line to ensure timely access to the latest data without increasing burden on the system due to frequent data exchange. When the timer reaches a set time point, the first PLC will send a data request signal to the second PLC. This signal contains information such as a type of data to be obtained, an identification of the target workstation and the like, so that the second PLC can accurately return corresponding data.

In some implementations, upon receiving a data request from the first PLC, the second PLC retrieves the second service data of the target workstation from its own database or real-time data cache based on the information in the request, and sends it to the first PLC through the communication interface. The data may include real-time status of the target workstation, processing progress, quality inspection results, and the like.

In some implementations, after obtaining the second service data, the first PLC will analyze and process it to extract necessary information for subsequent a decision-making or control operation. Meanwhile, the data may also be used to update relevant data in the MES or generate a report.

In this way, by regularly obtaining the second service data of the target workstation from the second PLC, real-time monitoring of a production line status may be achieved, ensuring transparency and traceability of the production process. Based on real-time data, the MES or the first PLC may promptly detect abnormal situations in the production process and take corresponding adjustment measures, such as stopping stations, adjusting process parameters, and the like, to improve production efficiency and product quality. By analyzing historical and real-time data, powerful support may be provided for optimizing decisions of the production line, such as predicting a production trend and optimizing a production plan.

In the embodiments of the present disclosure, obtaining the first service data by the first PLC based on the second service data of the target workstation obtained from the second PLC corresponding to the target workstation includes the first PLC converts the second service data into the first service data in a preset data storage format according to the data storage format, where the first service data is stored in a data storage area allocated by the first PLC for the target workstation, and different types of variables in the first service data correspond to different fixed addresses in the data storage area.

Herein the data storage format refers to a specific format or specification adopted by data during storage or transmission, including a data type, a data unit, data encoding, and the like.

Herein the data storage area refers to a specific area inside the first PLC used for storing data.

Herein the fixed addresses refer to unique and unchanging storage locations assigned to different variables in the data storage area. By fixing the address, fast access and modification of the variables may be achieved.

In some implementations, the first PLC is responsible for generating the first service data of the target workstation based on the second service data of the target workstation in the system for controlling automatic transit the yarn spindle. The data may contain various types of information, such as a status code, a numerical parameter, a timestamp, and the like. The first PLC is internally configured with the preset data storage format to ensure efficient exchange and analysis of data between different PLCs or between the PLCs and the MES. The first PLC converts the second service data according to the preset format. The conversion process may include data type conversion (such as converting form integer to floating-point), data unit unification (such as converting from millimeter to inch), decoding of data encoding (such as base conversion), and the like. The converted data is the first service data, which follows the preset data storage format for subsequent processing and transmission. The first PLC has allocated a dedicated data storage area for each target workstation on the production line. The first service data is stored in the data storage area corresponding to the target workstation. When storing, different variables (such as the status code, the numerical parameter, and the like) are assigned to different fixed addresses in the storage area. When it is necessary to read or modify a value of a certain variable, it can be directly accessed through its corresponding address, which improves efficiency of data processing.

In this way, through the preset data storage format and a format conversion process, consistency and accuracy of data from different sources during exchange and processing are ensured. Assigning the fixed storage address to each variable simplifies a process of data access and processing, and improves an overall performance of the system. The allocation and format definition of the data storage area have a certain degree of flexibility, which may be expanded and adjusted according to actual needs of the production line.

Next, a processing flow of the first PLC, which serves as the intermediate layer between the MES and the second PLC will be explained by taking an IT-PLC as the first PLC and a ME-PLC as the second PLC as an example.

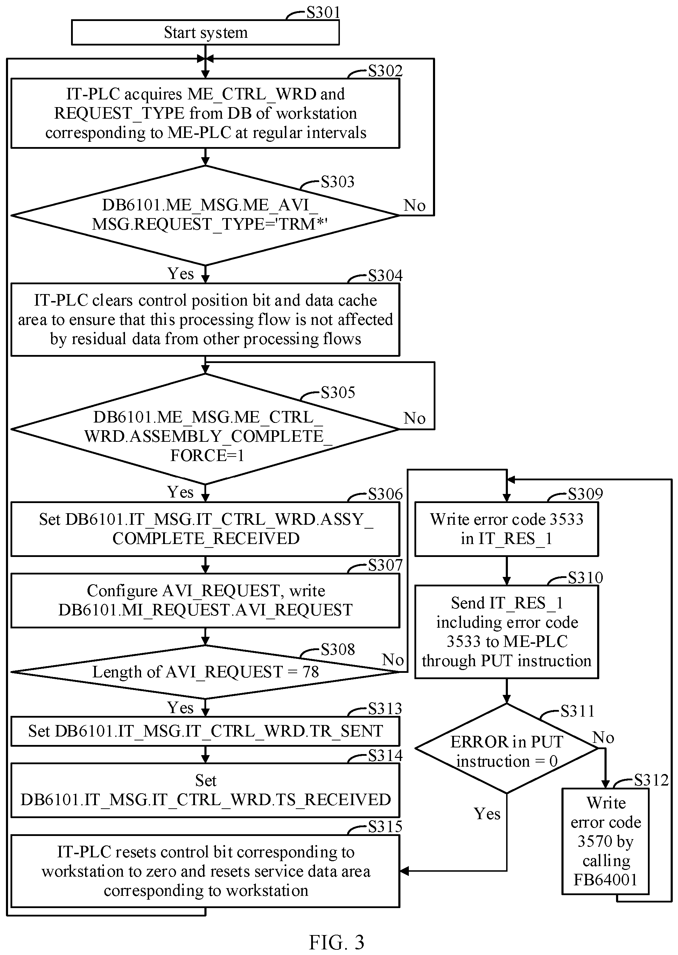

FIG. 3 is a schematic diagram of a processing flow of sending the compulsory transit request to the MES by the first PLC, as shown in FIG. 3, the processing flow includes following steps.
In S301: the system is started;
In S302: the IT-PLC acquires ME_CTRL_WRD and REQUEST_TYPE from a DB of a workstation corresponding to the ME-PLC at regular intervals.

Herein the ME_CTRL_WRD represents a control bit of the target workstation, and the REQUEST_TYPE represents a request type of the target workstation.

It should be noted that ME_MSG.ME-AVI_MSG written into the DB of its corresponding workstation by ME-PLC should be verified on the ME-PLC side to ensure integrity and accuracy of data.

For example, the ME_CTRL_WRD is acquired from DB6101.ME_MSG.ME_CTRL_WRD, and the REQUEST_TYPE is acquired from DB6101.ME_SG.ME_AVI_MSG. Here, 6101 is a serial number of the target workstation, DB6101.ME_MSG represents a DB block allocated by the ME-PLC for the workstation whose serial number is 6101, DB6101.ME_MSG.ME_AVI_MSG represents a variable allocated by the ME-PLC for the workstation whose serial number is 6101 to store the second service data written by the ME-PLC, and ME_MSG.ME_AVI_MSG represents the second service data written by the ME-PLC, such as a sequence number and the request type. The DB6101.ME_MSG.ME_CTRL_WRD is a variable allocated by the ME-PLC for the workstation whose serial number is 6101, used in the DB block to store the control bit of the workstation.

In S303: whether DB6101.ME_MSG.ME_AVI_MSG.REQUEST_TYPE = 'TRM*'?, if it is, S304 is performed, and if it is not, S302 is returned;
Herein the IT-PLC acquires the ME_AVI_MSG.REQUEST_TYPE='TRM*' from the DB of the workstation corresponding to the ME-PLC.

Herein the ME_AVI_MSG.REQUEST_TYPE = 'TRM*' represents that the request type of the ME-PLC is 'TRM*'.

The ME-PLC writes the string "TRM*" in transit information of the current workstation when it identifies that the target workstation requests the compulsory transit, to distinguish it from a normal online transit string "TR* *".

Herein the DB6101.ME_MSG.ME_AVI_MSG.REQUEST_TYPE is variable allocated by the ME-PLC for the workstation whose serial number is 6101, used in the DB block to store the request type.

In S304, the IT-PLC clears a control position bit and data cache area to ensure that this processing flow is not affected by residual data from other processing flows, and then S305 is performed;
In S305:
   whether DB6101.ME_MSG.ME_CTRL_WRD.ASSY_COMPLETE_FORCE is equal to 1? If it is, S306 is performed, and if it is not, S305 is returned;
Herein the IT-PLC acquires ME_CTRL_WRD.ASSY_COMPLETE_FORCE from the DB of the workstation corresponding to the ME-PLC;
Herein ME_CTRL_WRD.ASSY_COMPLETE_FORCE = 1 represents that the ME-PLC has been set to start the compulsory transit.

The DB6101.ME_MSG.ME_CTRL_WRD.ASSY_COMPLETE_FORCE is a variable in the DB block allocated by the ME-PLC for the workstation whose serial number is 6101, and used to store that the ME-PLC has been set to start the compulsory transit.

In S306: the IT-PLC set DB6101.IT_MSG.IT_CTRL_WRD.ASSY_COMPLETE_RECEIVED, then S307 is performed;
Herein IT_MSG.IT_CTRL_WRD.ASSY_COMPLETE_RECEIVED represents that the IT-PLC confirmed receipt of a message that ME-PLC has been set to start the compulsory transit.

DB6101.IT_MSG represents a DB allocated by the IT-PLC for the workstation whose serial number is 6101.

DB6101.IT_MSG.IT_CTRL_WRD.ASSY_COMPLETE_RECEIVED represent a variable allocated by the IT-PLC for the workstation whose serial number is 6101, used in the DB to store the receipt of the message that the ME-PLC has been set to start the compulsory transit.

In S307: AVI_REQUEST is configured, and DB6101.MI_REQUEST.AVI_REQUEST is written in the AVI_REQUEST;
Herein the AVI_REQUEST is an abbreviation of MI_REQUEST.AVI_REQUEST, which represents a request string sent to the MES by the IT-PLC.

DB6101.MI_REQUEST.AVI_REQUEST is a variable allocated by the IT-PLC for the workstation whose serial number is 6101, used in the DB to store the request string.

Herein FC is a custom functional module. FC60132 is a functional module serial number used to synthesize the AVI_REQUEST for the workstation whose serial number is 6101.

Herein variables in the DB6101 are configured to corresponding pins of the FC60132, the FC60132 outputs the AVI_REQUEST.

In S308: whether a length of the AVI_REQUEST = 78? If it is, S313 is performed, and if it is not, S309 is performed;
Herein 78 is a preset length threshold, which may be set or adjusted according to demand.

In S309: an error code 3533 is written in IT_RES_1;
Herein the error code 3522 represents that the length of the AVI_REQUEST is not equal to 78.

In S310: the IT_RES_1 including the error code 3533 is sent to the ME-PLC through a PUT instruction;
In S311: whether ERROR in the PUT instruction = 0? If it is not, S312 is performed; and if it is, S315 is performed;
In S312: an error code 3570 is written by calling FB64001, then S309 is returned;
Herein the error code 3570 represents that the ERROR in the PUT instruction is not equal to 0 and the PUT instruction is a PUT instruction issued in a case where the length of AVI_REQUEST is not equal to 78.

In S313: DB6101.IT_MSG.IT_CTRL_WRD.TR_SENT is set.

Herein IT_MSG.IT_CTRL_WRD.TR_SENT represents that the IT-PLC is set after writing the AVI_REQUEST.

Herein the DB6101.IT_MSG.IT_CTRL_WRD.TR_SENT is a variable allocated by the IT-PLC for the workstation whose serial number is 6101, used in the DB to represent that the IT-PLC is set after writing the AVI_REQUEST.

In S314: DB6101.IT_MSG.IT_CTRL_WRD.TS_RECEIVED is set.

IT_MSG.IT_CTRL_WRD.TS_RECEIVED represents that the IT-PLC is set after the received data of the ME-PLC is correct.

Herein DB6101.IT_MSG.IT_CTRL_WRD.TS_RECEIVED is a variable allocated by the IT-PLC for the workstation whose serial number is 6101, used in the DB to represent the T-PLC is set after the received data of the ME-PLC is correct.

After setting the IT_MSG.IT_CTRL_WRD.TS_RECEIVED, the IT-PLC waits a processing result. The MES usually performs the following processing: the MES reads the request string sent by the IT-PLC to the MES, writes it to the database, then resets the AVI-REQUEST, and the MES sends a response string to the IT-PLC.

In S315: the IT-PLC resets a control bit corresponding to the workstation to zero and resets service data area corresponding to the workstation.

Herein the resetting the control bit to zero by the IT-PLC may include:
DB6101.IT_MSG.UDT_IT_MSG_1.IT_CTRL_WRD.ASSY_COMPLETE_RECEIVED = 0;
DB6101.IT_MSG.UDT_IT_MSG_1.IT_CTRL_WRD.TR_SENT = 0;
DB6101.IT_MSG.UDT_IT_MSG_1.IT_CTRL_WRD.TS_RECEIVED = 0;
DB6101.IT_MSG.UDT_IT_MSG_1.IT_CTRL_WRD.MES_COMPLETE = 0;
resetting temporary variables used in DB6901 to zero.

Where the DB6901 represent an area allocated by the ME-PLC for the workstation whose serial number is 610, used in the DB to store the temporary variables.

Where DB6101.IT_MSG represents a data cache area allocated by the ME-PLC for the workstation whose serial number is 610, used in the DB to store various variables.

Where IT_CTRL_WRD.ASSY_COMPLETE_RECEIVED represents confirmation of receipt of the variable that the ME-PLC has been set to start the compulsory transit.

Where IT_CTRL_WRD.TR_SENT represents a variable that the IT-PLC is set after writing the AVI_REQUEST.

Where IT_CTRL_WRD.TS_RECEIVED represents a variable that the IT-PLC is set after receiving the data of the MES.

Where IT_CTRL_WRD.MES_COMPLETE represents that the IT-PLC notifies the ME-PLC data processing is completed.

Herein resetting the corresponding service data area by the IT-PLC includes: resetting DB6101.ME_AVI_MSG by calling FC64006, and resetting DB6101.IT_RES_1 by calling FC64008.

Herein, the FC64006 a module integrated with a function of resetting the ME_AVI_MSG. The FC64008 is a module integrated with a function of resetting the IT_RES_1.

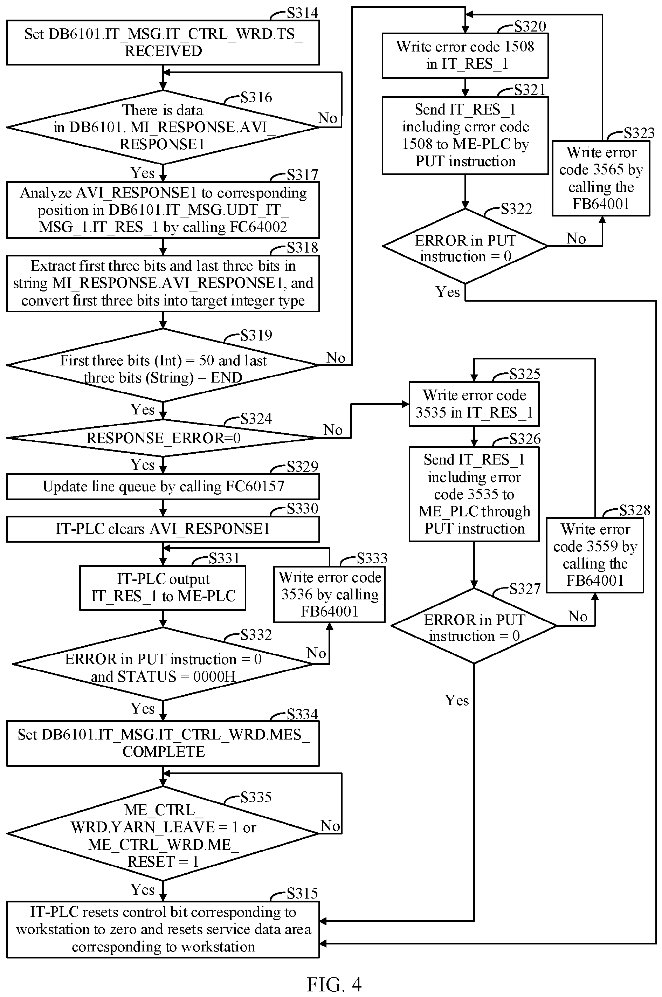

On the basis of FIG. 3, FIG. 4 shows a processing flow of sending the transit indication information by the first PLC to the second PLC after generates the transit indication information by the MES, as shown in FIG. 4, the processing flow includes following steps.

In S316: whether there is data in DB6101. MI_RESPONSE.AVI_RESPONSE1? If it is yes, S316 is continued, and if it is not, S317 is performed;
Herein MI_RESPONSE.AVI_RESPONSE1 represents the response string sent to the IT-PLC by the MES. The DB6101.MI_RESPONSE.AVI_RESPONSE1 is a variable allocated by the IT-PLC for the workstation whose serial numeral is 6101, used in the DB to store the response string sent to the IT-PLC by the MES.

In S317: the AVI_RESPONSE1 is analyzed to a corresponding position in DB6101.IT_MSG.UDT_IT_MSG_1.IT_RES_1 by calling the FC64002;
Herein the IT_MSG.UDT_IT_MSG_1.IT_RES_1 (shorted as IT_RES_1) represents the first service data output by the IT-PLC, as the processing result.

In S318: the IT-PLC extracts first three bits and last three bits in the string MI_RESPONSE.AVI_RESPONSE1, and converts the first three bits into a target integer type.

Herein a type name of the target integer type is "int".

It should be noted that a format of the response string returned by the MES must be correct, and a format error is not allowed. Adding format verification is a secondary verification.

In S319: whether the first three bits (Int) = 50 and the last three bits (String) = END? If it is not, S320 is performed, and if it is, S324 is performed;
Herein the String represents a data type of string.

Herein the IT-PLC checks whether the response string is qualified by the first three and last three characters.

In S320: an error code 1508 is written in IT_RES_1;
Herein, the error code 1508 represents that the first three bits (Int) ≠ 50 or the last three bits (String) ≠ END, that is the MES did not return response information in an agreed format.

In S321: the IT_RES_1 including the error code 1508 is sent to the ME-PLC by a PUT instruction;
In S322: whether ERROR in the PUT instruction = 0? If it is not, S323 is performed, and if it is, S315 is performed;
In S323: an error code 3565 is written by calling the FB64001, then S320 is returned;
Herein the error code 3563 represents the ERROR in the PUT instruction is not equal to 0, and the PUT instruction is a PUT instruction issued in a case where the first three bits (Int) ≠ 50 or the last three bits (String) ≠END.

In S324: whether RESPONSE_ERROR=0? If it is, S329 is performed, and if it is not, S325 is performed;
DB6101.IT_MSG.UDT_IT_MSG_1.IT_RES_1.RESPONSE_ERROR is a variable allocated by the IT-PLC for the workstation whose serial number is 6101, used in the DB to store whether there is an error in the response string sent to the IT-PLC by the MES.

Herein RESPONSE_ERROR=0 represents that there is no error in the response string sent to the IT-PLC by the MES.

In S325: an error code 3535 is written in the IT_RES_1;
Herein the error code 3535 represents RESPONSE_ERROR≠0.

In S326: the IT_RES_1 including the error code 3535 is sent to the ME_PLC through the PUT instruction;

Herein the error code 3535 represents that there is an error code in the response information returned by the MES.

In S327: whether the ERROR in the PUT instruction = 0? If it is, S315 is performed; and if it is not, S328 is performed;
In S328: an error code 3559 is written by calling the FB64001, then S325 is returned;
Herein the error code 3559 represents the ERROR in the PUT instruction≠ 0, and the PUT instruction is a PUT instruction issued in a case where ERROR in the PUT instruction ≠ 0.

In S329: a line queue is updated by calling FC60157;

Herein the FC60157 is a module integrated with a function of updating the line queue.

In S330: the IT-PLC clears the AVI_RESPONSE1 ;
Herein the AVI_RESPONSE1 complement of the sending of the response string from the MES to the IT-PLC;
In S331: the IT-PLC output the IT_RES_1 to the ME-PLC;
In S332: whether the ERROR in the PUT instruction = 0 and STATUS = 0000H? if it is yes, S333 is performed, and if it is not, S334 is performed;
Herein ERROR = 0 represents that there is no error in the PUT instruction. STATUS = 0000H represents that a status value = 0, H represents hexadecimal. The PUT instruction is an instruction for IT-PLC to send data to ME-PLC.

In S333: an error code 3536 is written by calling the FB64001, then S331 is returned;
In S334: the IT-PLC set DB6101.IT_MSG.IT_CTRL_WRD.MES_COMPLETE;
DB6101.IT_MSG.IT_CTRL_WRD.MES_COMPLETE is a variable allocated by the IT-PLC for the workstation whose serial number is 6101, used in the DB to store a notification of the IT-PLC of notifying the ME-PLC the data processing is completed.

Herein IT_MSG.IT_CTRL_WRD.MES_COMPLETE represents that the IT-PLC notifies that ME_PLC that the data processing is completed.

In S335: whether ME_CTRL_WRD.YARN_LEAVE = 1 or ME_CTRL_WRD.ME_RESET = 1 ? If it is yes, S315 is performed, and if it is not, S335 is returned.

Herein ME_MSG.ME_CTRL _WRD.YARN_LEAVE represents that the ME-PLC preparation for leaving the yarn spindle has been completed.

ME_CTRL_WRD.YARN _RESET represents that the control bit of the workstation is reset after transit of the yarn spindle on the workstation is completed under the control of the ME-PLC.

ME_CTRL_WRD.YARN_RESET =1 presents the current processing has been completed correctly, a set flag is assigned a value of 1, and an end reset may be executed.

It should be noted that the above workstation serial number, error code serial number, DB block serial number, variable name, storage address name, FC function module name, and FB function module name are only exemplary and not restrictive, and may be set or adjusted according to actual needs.

It should be understood that the schematic diagrams shown in FIGS. 1, 3 and 4 are only exemplary and not limiting, and they are extensible. Those having skill in the art may make various obvious changes and/or substitutions based on the examples in FIGS. 1, 3 and 4, and the resulting technical solutions still fall within the scope of the embodiments of the present disclosure.

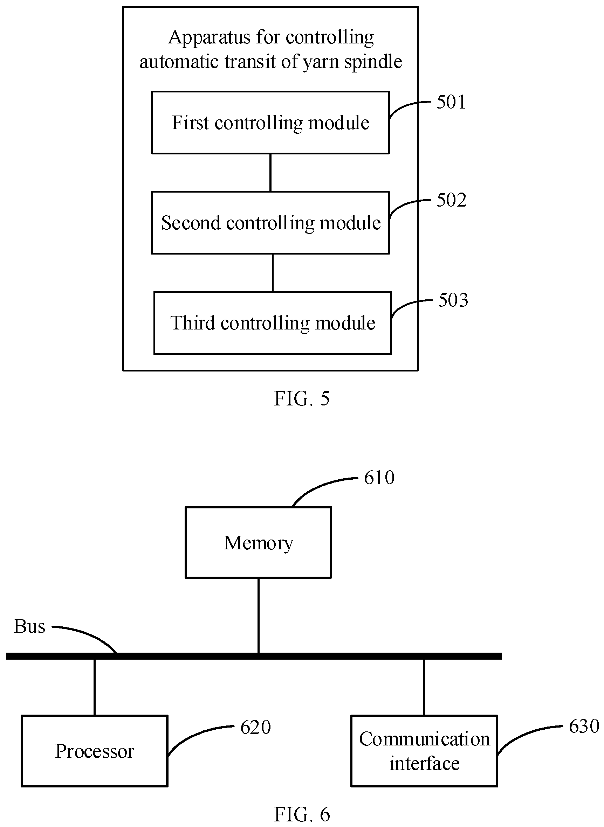

The embodiments of the present disclosure further provide an apparatus for controlling automatic transit of a yarn spindle, applied to a system for controlling the automatic transit of the yarn spindle, the system for controlling the automatic transit of the yarn spindle includes a MES, a first PLC and a plurality of second PLCs, the plurality of second PLCs each is connected to the first PLC, the first PLC is connected to the MES, where each of the plurality of second PLCs is responsible for controlling at least one workstation; as shown in FIG. 5, the apparatus for controlling the automatic transit of the yarn spindle includes:
a first controlling module 502 is configured for the first PLC to acquire second service data of a target workstation from a second PLC corresponding to the target workstation, obtain first service data of the target workstation based on the second service data, where the second service data includes a compulsory transit variable being equal to 1;
a second controlling module 502 configured for the first PLC to send the first service data to the MES, receive transit indication information which is determined based on the compulsory transit variable by the MES for the target workstation, where the transit indication information is transit permission; and
a third controlling module 503 configured for the first PLC to analyze the transit indication information to obtain an analysis result, return the analysis result to the second PLC corresponding to the target workstation for controlling the target workstation to perform a yarn spindle transit task based on the analysis result by the second PLC.

In some embodiments, the apparatus for controlling the automatic transit of the yarn spindle further includes a fourth controlling module (which is not shown in FIG. 5), where the fourth controlling module is configured for the second PLC notify or directly control a transit device to transfer the yarn spindle which has been processed by the target workstation to a next workstation of the target workstation in a case where the analysis result is the transit permission.

In some embodiments, the apparatus for controlling the automatic transit of the yarn spindle further includes a fifth controlling module (which is not shown in FIG. 5), where the fifth controlling module is configured to set the compulsory transit variable to 1 when the second PLC detects that a control button corresponding to the target workstation has been rotated to a manual mode, where the compulsory transit variable being equal to 1 represents that the target workstation requests compulsory transit.

In some embodiments, the apparatus for controlling the automatic transit of the yarn spindle further includes a sixth controlling module (which is not shown in FIG. 5), where the sixth controlling module is configured to determine that the transit indication information is the transit permission in a case where the MES detects that there is the compulsory transit variable being equal to 1 in the first service data.

In some embodiments, the apparatus for controlling the automatic transit of the yarn spindle further includes a compulsory transit processing module (which is not shown in FIG. 5) configured for the MES to record the first service data without performing determination processing of online transit conditions in the case where the MES detects that there is the compulsory transit variable being equal to 1 in the first service data.

In some embodiments, the apparatus for controlling the automatic transit of the yarn spindle further includes a seventh controlling module (which is not shown in FIG. 5), where the seventh controlling module is configured to determine whether the yarn spindle of the target workstation satisfies a transit condition based on target string data corresponding to the target workstation; determine the transit indication information as the transit permission if the transit condition is satisfied; and determine the transit indication information as the transit prohibition if the transit condition is not satisfied, the target string data is obtained by analyzing the first service data by the MES.

In some embodiments, the apparatus for controlling the automatic transit of the yarn spindle further includes the first controlling module 501 configured for the first PLC to acquire the second service data of the target workstation from the second PLC at regular intervals.

In some embodiments, the apparatus for controlling the automatic transit of the yarn spindle further includes an eighth controlling module (which is not shown in FIG. 5), where the eighth controlling module is configured for the first PLC to convert the second service data into the first service data in a preset data storage format according to the data storage format, where the first service data is stored in a data storage area allocated by the first PLC for the target workstation, and different types of variables in the first service data correspond to different fixed addresses in the data storage area.

Those having skill in the art may understand that functions of each processing module in the apparatus for controlling the automatic transit of the yarn spindle according to the embodiments of the present disclosure may be understood by referring to relevant descriptions of the method for controlling the automatic transit of the yarn spindle mentioned above, and each processing modules in the apparatus for controlling the automatic transit of the yarn spindle according to the embodiments of the present disclosure may be implemented through analog circuits that implement the functions of the embodiments of the present disclosure, or through operation of software that executes the functions of the embodiments of the present disclosure on an electronic device.

The apparatus for controlling the automatic transit of the yarn spindle according to the embodiments of the present disclosure can achieve management of automatic, online and compulsory transit of the yarn spindle, thereby improving transiting efficiency of the yarn spindle.

According to embodiments of the present disclosure, the present further provides an electronic device and a readable storage medium.

FIG. 6 is a structural block diagram of an electronic device according to the embodiments of the present application. As shown in FIG. 6, the electronic device includes a memory 610 and a processor 620, a computer program capable of being run on the processer 620 is stored in the memory 610. The number of each of the memory 610 and processor 620 may be one or more. The memory 610 may store one or more computer programs, which, when the one or more computer programs are executed by the electronic device, cause the electronic device performs the method provided in the above method embodiments. The electronic device may also include a communication interface 630 configured to communicate with an external device for carrying out data interactive transmission.

If the memory 610, the processor 620 and the communication interface 630 are implemented independently, the memory 610, the processor 620 and the communication interface 630 may be connected to each other and complete communication with each other through a bus. The bus may be an Industry Standard Architecture (ISA) bus, a Peripheral Component Interconnect (PCI) bus, an Extended Industry Standard Architecture (EISA) bus or the like. The bus may be divided into an address bus, a data bus, a control bus and the like. For ease of representation, the bus is shown by only one thick line in FIG. 6, which does not mean that there is only one bus or one type of bus.

Alternatively, in specific implementation, if the memory 610, the processor 620 and the communication interface 630 are integrated on one chip, the memory 610, the processor 620 and the communication interface 630 may complete communication with each other through internal interfaces.

It should be understood that the above processor may be a central processing unit (CPU), or may be another general-purpose processor, a digital signal processing (DSP), an application specific integrated circuit (ASIC), a field programmable gate array (FPGA) or another programmable logic device, a discrete gate or a transistor logic device, a discrete hardware component, or the like. The general-purpose processor may be a microprocessor or any conventional processor, etc. It is worth noting that the processor may be a processor that supports the Advanced RISC Machines (ARM) architecture.

Furthermore, alternatively, the above memory may include a read-only memory and a random-access memory, and may also include a non-volatile random access memory. The memory may be either a volatile memory or a non-volatile memory, or it may include both the volatile and non-volatile memories. Where the non-volatile memory may include a read-only memory (ROM), a programmable ROM (PROM), an erasable programmable PROM (EPROM), an electrically erasable programmable ROM (EEPROM), or a flash memory. The volatile memory may include a random-access memory (RAM), which is used as an external cache. With illustrative but not restrictive illustrations, many forms of RAM are available, for example, a static RAM (SRAM), a dynamic ROM (DRAM), a synchronous DRAM (SDRAM), a double data date SDRAM (DDR SDRAM), an enhanced SDRAM (ESDRAM), a Synchlink DRAM (SLDRAM) and a direct RAMBUS RAM (DR RAM).

In the above embodiments, it may be realized in whole or in part by software, hardware, firmware, or any combination thereof. When implemented using software, it may be implemented in whole or in part in a form of a computer program product. The computer program product includes one or more computer instructions. When the computer instructions are loaded and executed on a computer, a process or function described in the embodiments of the present disclosure is produced in whole or in part. The computer may be a general-purpose computer, a specialized computer, a computer network, or another programmable apparatus. The computer instructions may be stored in a computer-readable storage medium, or transmitted from a computer-readable storage medium to another computer-readable storage medium, for example, the computer instructions may be transmitted from a website site, computer, server or data center to another website site, computer, computer, server or data center by a wired (e.g., coaxial cable, optical fiber, data subscriber line (DSL)) or wireless (e.g., infrared, Bluetooth, microwave, etc.) manner. The computer-readable storage medium may be any available medium that the computer can access, or may be a data storage device such as a server, a data center, etc., which is integrated with one or more available medium. The available medium may be magnetic medium (e.g., floppy disk, hard disk, magnetic tape), optical medium (e.g., digital versatile disc (DVD)) or semiconductor medium (e.g., solid state disk (SSD)) and the like. It should note that the computer-readable storage medium referred to in the present disclosure may be non-volatile storage medium, in other words, non-transient storage medium.

Those having ordinary skills in the art may understand that all or part of the steps to realize the above embodiment may be completed by hardware, or by instructing related hardware by a program, and the program may be stored in a computer-readable storage medium, and the storage medium mentioned above may be a read-only memory, a disk or an optical disc, etc.

In descriptions to the embodiments of the present disclosure, descriptions referring to terms "an embodiment", "some embodiments", "an example", "a specific example", or "some examples" or the like mean that specific features, structures, materials, or features described in the embodiment(s) or example(s) are included in at least one embodiment or example of the present disclosure. Furthermore, the specific features, structures, materials, or features described may be combined in an appropriate manner in any one or more embodiments or examples. In addition, without contradicting each other, those having skills in the art may combine and integrate different embodiments or examples described in this Description and features of the different embodiments or examples.

In the descriptions to the embodiments of the present disclosure, unless otherwise indicated, "/" means "or", for example, A/B may mean A or B. The word "and/or" herein is merely an associated relationship for describing associated objects, which indicates that there may be three kinds of relationships, for example, A and/or B may means that there are three cases: A alone, both A and B, and B alone.

In the descriptions to the embodiments of the present disclosure, terms "first" and "second" are used only for a descriptive purpose and should not be construed as indicating or implying relative importance or implying the number of technical features indicated. Thus, features defined with the terms "first" and "second" may explicitly or implicitly include one or more of these features. In the descriptions to the embodiments of the present disclosure, unless otherwise specified, "a/the plurality of" means two or more of them.

The foregoing is only exemplary embodiments of the present disclosure, but is not used to limit the present disclosure, and all changes, substitutions and improvements within the scope of the present disclosure should be included in the protection scope of the present disclosure.

## Claims

1. A method for controlling automatic transit of a yarn spindle, applied to a system for controlling the automatic transit of the yarn spindle, **characterized in that** the system for controlling the automatic transit of the yarn spindle comprises a manufacturing execution system, MES, a first programmable logic controller, PLC and a plurality of second PLCs, wherein each of the plurality of second PLCs is configured to control at least one workstation, the plurality of second PLCs each is connected to the first PLC, the first PLC is connected to the MES,
the method for controlling the automatic transit of the yarn spindle comprises:
acquiring (S201), by the first PLC, second service data of a target workstation from a second PLC corresponding to the target workstation, obtaining first service data of the target workstation based on the second service data, wherein the second service data comprises a compulsory transit variable being equal to 1;
sending (S202), by the first PLC, the first service data to the MES, receiving transit indication information which is determined based on the compulsory transit variable by the MES for the target workstation, wherein the transit indication information is transit permission; and
analyzing (S203), by the first PLC, the transit indication information to obtain an analysis result, returning the analysis result to the second PLC corresponding to the target workstation for controlling the target workstation to perform a yarn spindle transit task based on the analysis result by the second PLC.

2. The method of claim 1, **characterized in that** controlling the target workstation to perform the yarn spindle transit task based on the analysis result by the second PLC comprises:
notifying, by the second PLC, a transit device or directly controlling the transit device to transfer the yarn spindle which has been processed by the target workstation to a next workstation of the target workstation in a case where the analysis result is the transit permission.

3. The method of claim 1, **characterized in that** the method of controlling the automatic transit of the yarn spindle further comprises:
setting the compulsory transit variable to 1 when the second PLC detects that a control button corresponding to the target workstation has been rotated to a manual mode, wherein the compulsory transit variable being equal to 1 represents that the target workstation requests compulsory transit.

4. The method of claim 1, **characterized in that** the method of controlling the automatic transit of the yarn spindle further comprises:
determining that the transit indication information is the transit permission in a case where the MES detects that there is the compulsory transit variable being equal to 1 in the first service data.

5. The method of claim 4, **characterized in that** the method of controlling the automatic transit of the yarn spindle further comprises:
recording, by the MES, the first service data without performing determination processing of online transit conditions in the case where the MES detects that there is the compulsory transit variable being equal to 1 in the first service data.

6. The method of claim 5, **characterized in that** the determination processing of the online transit conditions comprises:
determining whether the yarn spindle of the target workstation satisfies a transit condition based on target string data corresponding to the target workstation; determining the transit indication information as the transit permission if the transit condition is satisfied; and determining the transit indication information as the transit prohibition if the transit condition is not satisfied, the target string data is obtained by analyzing the first service data by the MES.

7. The method of claim 1, **characterized in that** acquiring, by the first PLC, the second service data of the target workstation from the second PLC corresponding to the target workstation comprises:
acquiring, by the first PLC, the second service data of the target workstation from the second PLC at regular intervals.

8. The method of claim 1, **characterized in that** the method of controlling the automatic transit of the yarn spindle further comprises:
converting, by the first PLC, the second service data into the first service data in a preset data storage format according to the data storage format, wherein the first service data is stored in a data storage area allocated by the first PLC for the target workstation, and different types of variables in the first service data correspond to different fixed addresses in the data storage area.

9. An apparatus for controlling automatic transit of a yarn spindle, applied to a system for controlling the automatic transit of the yarn spindle, **characterized in that** the system for controlling the automatic transit of the yarn spindle comprises a manufacturing execution system, MES, a first programmable logic controller, PLC and a plurality of second PLCs, wherein each of the plurality of second PLCs is configured to control at least one workstation, the plurality of second PLCs each is connected to the first PLC, the first PLC is connected to the MES, the apparatus for controlling the automatic transit of the yarn spindle comprises:
a first controlling module (501) configured for the first PLC to acquire second service data of a target workstation from a second PLC corresponding to the target workstation, obtain first service data of the target workstation based on the second service data, wherein the second service data comprises a compulsory transit variable being equal to 1;
a second controlling module (502) configured for the first PLC to send the first service data to the MES, receive transit indication information which is determined based on the compulsory transit variable by the MES for the target workstation, wherein the transit indication information is transit permission; and
a third controlling module (503) configured for the first PLC to analyze the transit indication information to obtain an analysis result, return the analysis result to the second PLC corresponding to the target workstation for controlling the target workstation to perform a yarn spindle transit task based on the analysis result by the second PLC.

10. A non-transitory computer-readable storage medium storing a computer instruction thereon, wherein the computer instruction is used to cause a computer to execute the method of any one of claims 1 to 8.
